(19) Europäisches Patentamt European Patent Office Office européen des brevets

(11) **EP 3 975 751 B1**

(12) **EUROPEAN PATENT SPECIFICATION**

(45) Date of publication and mention
of the grant of the patent:
**08.10.2025   Bulletin 2025/41**

(21) Application number: **20729066.9**

(22) Date of filing: **29.05.2020**

(51) International Patent Classification (IPC):
*A23L 5/48* *(2016.01)*

(52) Cooperative Patent Classification (CPC):
**A23L 5/48**

(86) International application number:
**PCT/EP2020/064950**

(87) International publication number:
**WO 2020/239971 (03.12.2020 Gazette 2020/49)**

(54) **FOOD COLOURANT**

LEBENSMITTELFARBSTOFF

COLORANT ALIMENTAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **31.05.2019   EP 19177718**

(43) Date of publication of application:
**06.04.2022   Bulletin 2022/14**

(73) Proprietor: **Oterap Holding B.V.**
**1507 BR Zaandam (NL)**

(72) Inventors:
• **BOOGAARD, Erik**
**1507 BR Zaandam (NL)**

• **FONKERT, Charlotte**
**1507 BR Zaandam (NL)**

(74) Representative: **van Dam, Vincent et al**
**Octrooibureau Vriesendorp & Gaade B.V.**
**Koninginnegracht 19**
**2514 AB Den Haag (NL)**

(56) References cited:
WO-A1-97/11612          CH-A5- 648 053
CN-A- 107 684 067       DE-A1- 102014 109 061
US-A1- 2006 003 061     US-A1- 2008 317 914
US-B2- 8 557 319

• **DATABASE WPI Week 201816, Derwent World
Patents Index; AN 2018-15034E**

EP 3 975 751 B1

**Description**

**Field of the Invention**

The present invention relates to a food colourant for a dark brown to black colour, to a method for making the food colourant and to food products comprising the food colourant. The invention is defined by the appended claims.

**Background of the invention**

A common ingredient in many foods and beverages in which a dark colour is preferred, is caramel colour. Caramel may be produced by caramelisation of saccharides in the presence of alkali, ammonia, sulphite or combinations thereof. The use of these compounds to manufacture caramel colour may result in the formation of 4-methylimidazole (4-MEI). In recent years, evidence for the carcinogenicity of 4-MEI has raised concerns about uses of these caramel colour types. Caramel colour is defined as food additive and therefore requires E150 labelling.

Caramel colour may also be produced by a Maillard reaction at high temperatures, avoiding the formation of carcinogenics. Often the degree of colouring of these caramel replacers is not as desired. US 2016/0278400 describes a process for producing a caramel colour based food dye, whereby the process involves a Maillard reaction mixture at pH 6-9. US 4,886,659 describes a process of producing a powder with a distinctive yellow, orange or brown colour which involves a Maillard reaction. US 8,557,319 discloses a method of preparing coloured products by heating genipin containing fruit juice with edible juices or extracts from fruits, vegetables, milk, soy or meat for several hours at 50-95 degrees Celsius. Stable blue to purple natural colourants are obtained.

To obtain the desired degree of caramel colouring, patent application CH 648 053 discloses heating a paste containing an isolated reducing sugar and a source of free amino acids at pH 6-8, at 95-100 degrees Celsius for 3-15 hours, to obtain a colourant with an intensity close to that of caramel colour. CN 107 684 067 discloses reacting yeast extract with isolated sugars in a ratio of 4:1, at 80-95 degrees Celsius to obtain a yeast extract which is darker than state of the art yeast extracts. The dark yeast extract has a strong roasting aroma and can be used for enhancing roasted aroma flavour in dark condiments. US 2006/003061 discloses browning compositions which comprise browning agents containing (i) a sugar or sugar acid having at least two carbonyl groups, for example 2,5-diketo-D-gluconic acid, and (ii) an amine source.

Ingredients used in these alternative processes, such as hydrolysed animal protein, glycine and isolated reducing sugars, are not in line with clean label and natural, which has been the trend in the food industry for the last few years.

There is a need for a food colourant which meets the actual needs of consumers and producers in the food industry.

**Detailed description of the invention**

In one aspect, the present invention relates to a method for preparing a food colourant having a deep brown to black colour and having a colour intensity of at least 6 at 490 nm, wherein the method comprises:

(i) providing a liquid composition comprising a 15% w/w to 60% w/w of a fruit, vegetable, honey or a fruit vegetable side stream, syrup, sap, juice, pulp, puree or extract and 25% w/w to 85% w/w of an amino acid ;
(ii) heating the liquid composition for 1 to 12 hours at 85 to 110 degrees C;
(iii) optionally, then drying the heated liquid composition until a powder or paste is obtained with a dry matter content of 65% w/w to 100% w/w by weight of the powder or paste.

The method according to the invention uses only natural ingredients for the preparation of the food colourant. As a consequence, food products comprising the colourant according to the invention may be labelled as natural in jurisdictions were this is relevant.

In contrast to existing methods for the preparation of dark food colourants, the method according to the invention allows for the use of other amino acids than glycine. As a consequence, reactions which are frequently experienced when using glycine, such as sudden temperature rises, production of gases, like carbon dioxide, and formation of insoluble particles, may be prevented. In the method according to the invention, other amino acids may be used without compromising the dark colour of the colourant. This makes the method for producing dark colour much more versatile and controllable than methods in which only glycine can be used for producing a dark colour.

The food colourant is a composition which may be used to give a dark brown or black colour to food products. The food colourant may be used to improve the appearance of food products, in particular the appearance of cooked products. The food colourant may be used as a caramel colour replacer in food and beverages. It is at least as dark as caramel, without negatively affecting the taste of the product to which it is added.

**EP 3 975 751 B1**

The composition for preparing the food colourant comprises 15% w/w to 60% w/w, such as 25% w/w to 55% w/w or 30% w/w to 55% w/w, of a fruit, vegetable, honey or a fruit or vegetable side stream, syrup, sap, juice, pulp, puree or extract, whereby percentages are preferably based on 100% dry matter. Isolated reducing sugars, such as isolated aldoses or isolated ketoses, for example glucose, fructose, lactose, ribose, sucrose or xylose, or mixtures of such isolated reducing sugars, are not used in the method according to the invention, since in some jurisdictions they do not allow the end product to be labelled as natural.

The honey may refer to any type of honey, such as liquid honey or comb honey and may be produced from the nectar from any type of flower or mix of flowers, such as from wild flowers or from the flowers from a specific tree, shrub or perennial.

The fruit or vegetable or product based on fruit or vegetable may be a syrup, a sap, a juice, such as a concentrated juice or a fresh juice, a pulp, a puree or an extract from a fruit or vegetable. The product based on fruit or vegetables may be obtained from a fruit or vegetable by any conventional means, such as pressing or squeezing. The product based on fruit or vegetable may be prepared from fresh fruits or vegetables, from fruit or vegetable fractions which would normally be discarded, such as processing side streams, including blanching water, stems, peels and leaves, or from dried and dejuiced fruit or vegetables.

The product based on fruit or vegetables may be derived from any fruit or vegetable, or mixtures of fruits or vegetables, in particular those fruits or vegetables which are rich in sugar, such as one or more selected from apricot, agave, apple, banana, bean, beet, Brussels sprouts, carrot, cherry, corn, courgette, date, fig, grape, leek, lychee, mango, melon, passion fruit, pear, peach, pineapple, plum, prune, pumpkin, tomato, onion, pea, sweet potato and zucchini. In one embodiment, the fruits or vegetables are selected from apricot, agave, apple, banana, bean, beet, Brussels sprouts, carrot, cherry, corn, courgette, date, fig, grape, leek, lychee, mango, melon, pear, pineapple, plum, prune, pumpkin, , tomato, onion, pea, sweet potato and zucchini.

A fruit or vegetable syrup is a sweet viscous liquid comprising water and syrup, which is derived from fruit or vegetables. The sweetness of the syrup is due to its natural sugar content. The sugar content is generally listed by a brix value. Brix is generally defined as the percent of soluble solids primarily made up of natural sugars. The fruit syrup generally has an overall brix value (Bx) of from 40 to 90 degree Bx, such as from 60 to 80 degree Bx, more preferably from 65 to 75 degree Bx. A suitable commercially available syrup is for example apple syrup Herbarom AF 01, Herbafood, Germany.

A fruit or vegetable sap is the juice of a fruit or vegetable, typically obtained by squeezing or maceration of the fruit or vegetable. A fruit or vegetable pulp includes the membranous or fibrous fraction of a fruit or vegetable, in particular the fraction remaining after extracting the juice.

In one embodiment, the source of reducing sugar is honey, is derived from apple, such as apple syrup, or derived from leek.

The composition for preparing the food colourant comprises 25% w/w to 85% w/w, such as 25% w/w to 60% w/w, 25% w/w to 55% w/w or 25% w/w to 50% w/w, of an amino acid, whereby percentages are preferably based on 100% dry matter. Any amino acid or mixtures of amino acids may be used. The amino acid may be present in an amino acid preparation which consists or comprises the amino acid. The amino acid preparation preferably comprises at least 50% w/w, at least 60% w/w, at least 70% w/w, at least 80% w/w or at least 90% w/w of the amino acid or of the mixture of amino acids, based on the weight of the preparation, such as 50% w/w to 100% w/w, 60% w/w to 100% w/w, 70% w/w to 100% w/w, 80% w/w to 100% w/w or 90% w/w to 100% w/w. Preferably, the amino acid is a natural amino acid. The term "natural amino acid" refers to an amino acid which is produced by or obtained from a natural source, such as from a plant, animal or a microorganism, such as from bacteria, yeast or filamentous fungi. The method for obtaining or producing the natural amino acid may include fermentation, crystallisation or extraction. Fermentative production of amino acids, in L, DL or D form, but particular in the L or DL form, is known in the art. Such fermentations typically involve culturing microorganisms capable of producing one or more specific amino acids in a medium comprising a suitable carbon source and suitable nitrogen source, preferably a carbon or nitrogen source from plant material, from example from vegetable material. The skilled person will understand that any type of microorganism may be used, but the microorganisms used are preferably non GMO, in line with the trend of natural food. The amino acid may then be obtained by processing, i.e. drying, the medium or by isolating it from the fermentation medium, for example by methods involving crystallisation or extraction. Natural amino acids are commercially available, for example L-Lysine, as L-Lysine monohydrochloride from CJ Haide (Ningbo) Biotech Co., Ltd, China, and L-serine, as DL-Serine from Sigma Aldrich. Natural lysine or serine may be produced by fermenting lysine or serine producing bacteria, such as Coryneform bacteria. Suitable examples of Coryneform bacteria include those belonging to the genera *Arthrobacter, Brevibacterium, Corynebacterium, Microbacterium* and *Micrococcus.* Suitable amino acids for use in the methods include glycine, serine and lysine, because the use of these amino acids leads to a dark product. Serine and lysine have the advantage over glycine that these amino acids make the process more controllable because they are less reactive, while at the same time the deep dark colour of the colourant is not compromised. This makes the method for producing dark colour much more versatile. Therefore, in a preferred embodiment, glycine, serine or lysine is used in the method according to the invention, more preferably, glycine, serine

3

or lysine produced by microbial fermentation is used. To prepare a product fitting in the natural trend, serine or lysine is used in the method according to the invention, more preferably, serine or lysine produced by microbial fermentation is used. Preferably, plant material, for example from vegetable material, is used for fermentation. The amino acid is preferably not obtained by protein hydrolysis or chemical synthesis if the objection is to prepare a product fitting in the natural trend.

The composition for preparing the food colourant may optionally further comprise 0.01% to 18% w/w, such as 12% w/w to 15% w/w of a protein source, such as hydrolysed vegetable protein, yeast extract, deactivated yeast, beef extract, chicken extract, pork extract or soy sauce. Percentages are preferably based on 100% dry matter. Preferably, these protein sources are mainly used as a filler, not as the amino acid source. The low reactivity of these protein sources decreases the intensity of the reaction and makes the reaction easier to control, but the amino acid content of these hydrolysates and extracts is usually not high enough to use these products as the main amino acid source in the method according to the invention. In one embodiment, yeast extract is used in the method according to the invention. The yeast extract is preferably an autolysate, which is a concentration of the soluble contents of the yeast obtained by lysis of the cell by its own endogenous enzymes. It may be obtained commercially, for example YEAST EXTRACT EXLV-LS-2111 from Levapan S.A., Colombia or Springer® 0514 / 0 - SP - L from Biospringer. It may be prepared from yeast, for example by autolysis, thermolysis or mechanical disruption of yeast cells, as long as there is no addition of other enzymes.

The composition comprising 15% w/w to 60% w/w a fruit, vegetable, honey or a fruit or vegetable side stream, syrup, sap, juice, pulp, puree or extract and 25% w/w to 85% w/w of an amino acid is a liquid composition, preferably with a dry matter content in the range of 35-80% w/w, of 50-80% w/w or of 60-80% w/w, based on the total weight of the composition. The composition may be an aqueous liquid composition. In one embodiment, the liquid composition is a paste. The liquid composition is heated to a temperature in the range of 85-110 degrees C, such as 90-110 degrees C. The higher the temperature, the faster the reaction. If higher temperatures are used, there is a higher risk of the formation of insoluble particles in the solution, which may lead to turbidity or sediments and of the formation of unhealthy process contaminants, such as acrylamide or 4-methylimadizole. Therefore, temperatures in the range of 85-110 degrees C, such as 90-110 degrees are used. During heating, the liquid composition is preferably stirred. The stirring rate may be in the range of 100 to 1000 rpm, such as 100 to 500 rpm or 200 to 400 rpm. Stirring may be continuously or at intervals.

The composition is heated until the colour of the composition is stable. The colour is stable if there is no significant further darkening of the product during at least one hour while the product core temperature is 80 degrees C or higher. This is the end of the reaction. Heating until the end of the reaction, may take from 1-12 hours, in particular 4-8 hours, such as 6-7 hours. The person skilled in the art will understand that the darker the colour the better.

In one embodiment, the method for preparing a food colourant according to the invention comprises:

(i) providing a liquid composition comprising a 35% w/w to 60% w/w of a fruit, vegetable, honey or a fruit or vegetable side stream, syrup, sap, juice, pulp, puree or extract, 40% w/w to 60% w/w of an amino acid and optionally 15% w/w to 17% w/w of a protein source;
(ii) heating the liquid composition for 4 to 8 hours at 85 to 110 degrees C; and optionally,
(iii) then drying the heated liquid composition until a powder or paste is obtained with a dry matter content of 65% w/w to 100% w/w by weight of the powder or paste.

There is no need to adjust the pH during heating, since the versatile process according to the invention allows the dark brown to black colourant to be formed at both low and high pH. However, if a certain pH is desired for certain applications, pH may be adjusted, for instance to a pH in the range of pH 2.0 to pH 5.0, a pH in the range of pH 5.0 to pH 7.0 or a pH in the range of pH 6.0 to pH 8.0. pH adjustment may be done using any suitable method known in the art, for example using $Na_2CO_3$ or NaOH. In one embodiment, NaOH is preferably used. In another embodiment, $Na_2CO_3$ is preferably used.

After heating until darkening has stopped, a clear liquid with a dark colour is obtained, such as dark brown to black, which includes dark brown, black and any colour in between. This is the food colourant according to the invention. The dry matter content of the food colourant is in the range of 65% w/w to 100% w/w by weight, for example in het range of 75% w/w to 100% w/w. The colourant may be used immediately or it may be stored until use. The food colourant may be formulated, for example into a liquid, a paste or a powder.

Optionally, the liquid composition is dried into a paste or powder, preferably with a dry matter content in the range of 65% w/w to 100% w/w, such as from 80% w/w to 100% w/w or from 90% w/w to 100% w/w, by weight of the paste or powder. Suitable drying techniques include spray drying, freeze-drying, belt drying and oven drying. In one embodiment, the liquid composition is dried into a powder by vacuum oven drying. An oven temperature of 100 degrees C is typically sufficient (depending on the heat transfer in the oven) to obtain a product temperature of at least 55 degrees C at start of the vacuum, increasing to a temperature in the range of 90 to 95 degrees C at the end of the drying. Vacuum pressure is between 10 and 300 mbar, whereby a pressure of 1000 mbar is 1 atm. Vacuum may be constant, at intervals or a combination of both. The resulting cake after drying is typically ground, for example using a hammer mill, to obtain a powder. The dry matter content of the powder is preferably in the range of 92-100% w/w, more preferably in the range of 95-100% w/w, based on the weight of the powder. In one embodiment, a powder with a dry matter content in the range of 92-100% w/w, more preferably in the range of 95-100% w/w, based on the weight of the powder, is obtained by vacuum drying.

The powder particles may have any convenient size. Particle size may for example be determined by using a sieve. In one embodiment, the powder particle size is in the range of 0.05-5 mm, preferably in the range of 0.1-5 mm, more preferably in the range of 0.1-3 mm. In another embodiment, most particles have a size in the range of 0.2 to 0.8 mm.

The colourants prepared using the method according to the invention have a dark brown to black colour and have a colour intensity of at least 6 at 490 nm. When added to a food or feed product or food or feed ingredient, they leave the taste of the food or feed product or food or feed ingredient substantially unchanged. They are not perceived, for example by a trained taste panel, as adding a sweet or bitter taste. As a consequence, colourants according to the invention have the advantage of the caramel powder, but not the disadvantages of the caramel powder, such as a typical caramel taste or a bitter taste. This is due to their method of production.

In another aspect, the present invention relates to a food colourant obtainable by the method according to the invention. The food colourant according to the invention is of a dark colour, such as dark brown to black, which includes dark brown, black and any colour in between, having a colour intensity at 490 nm of at least 6, such as at least 6.0, preferably at least 6.5, at least 7.0 or at least 7.5. The colour intensity at 490 nm may for example have a value in the range of 6.0 to 12, in the range of 6.5 to 12, in the range of 7.0 to 12, in the range of 6.0 to 9.0 or in the range of 6.5 to 9.0. Colour intensity is a measure for the darkness of the product. A colour intensity of at least 6.0 at 490 nm corresponds to a dark colour, such as dark brown to black. As a consequence of this high colour intensity, only low doses of the food colourant are required to darken a food product. Colour intensity is defined as:

$$\text{colour intensity} = \frac{\text{sample absorbance at 490 nm}}{\text{sample weight (grams)}}$$

wherein the sample is a 0.05-0.15% w/v sample in demineralised water. Samples are preferably filtered through a filter with a cut-off of 0.20 $\mu$m to remove any solids before analysis in the photospectrometer. An intensity of at least 6 corresponds to a dark colour, such as dark brown to black. The powders prepared using the method according to the invention are as least as dark as caramel powder, but do not have the disadvantages of the caramel powder, such as a typical caramel taste or a bitter taste.

By using a 0.05-0.15 % w/v sample in demineralised water, absorbance at 490 nm will be between 0.1 and 1.0. Absorbance of a 0.1 % w/v sample in distilled water at 600 nm will be minimally 0.100. In the content of the present invention, colour intensity is preferably measured using a photospectrometer, preferably a DR1900-02 photospectrometer (Hach Lange GmbH, Germany), and a 1 cm light path.

The food colourant may be used in applications at both low and high pH, from pH 2 to pH 9. It has good acid solubility and it readily forms a clear solution at, also at low pH, such as at a pH of 4.0 or lower, at a pH of 3.0 or lower or at a pH of 2.0 or lower.

In another aspect, the present invention relates to the use of the food colourant according to the invention in a process for preparing a food or feed product or food or feed ingredient. A food or feed ingredient is typically used to prepare a food or feed product. The process comprises adding a food colourant according to the invention to a food or feed product or food or feed ingredient. The food or feed product or food or feed ingredient may be any food or feed product or food or feed ingredient for which it is desired to improve its appearance by giving it a darker colour, such as a bakery product, a meat product, a dairy product, a ready-meal, a canned product, a sauce, dressing or gravy, a snack product, a soup product, a savoury product, a sweet product, a beverage, a herb, a filling, a marinade or a seasoning. The food or feed product may be for consumption by any human or animal, including healthy individuals, patients, people on special diets, elderly, children, pets, husbandry, cattle, zoo animals, farm animals and sport animals. In one embodiment, the food colourant is added to a beverage, such as an alcoholic beverage, a dairy or non-dairy milk based beverage, such as almond milk; a powdered beverage, such as an instant chocolate drink, or acidic drink, such as a carbonated or a non-carbonated soft drink. The skilled person will understand that the dark food colourant may also be used to colour food which is not consumed, such as food for decoration or other non-food applications.

An advantage of the food colourant according to the invention over existing dark brown food colourants, for example produced by Maillard reactions, is that only low doses of the colourant are required to darken a food or feed product or food or feed ingredient. As a consequence, the food colourant according to the invention conveys colour while leaving the original taste of the food or feed product or food or feed ingredient to which it is added substantially unchanged. In one embodiment, the colourant according to the invention does not add a sweet or bitter taste. This may for example be assessed by a trained taste panel. The powders prepared using the method according to the invention are as least as dark as caramel powder, which is reflected in a colour intensity of at least 6, such as at least 6.0, at least 6.5, at least 7.0 or at least 7.5, such as for example a colour intensity in the range of 6.0 to 12, in the range of 6.5 to 12, in the range of 7.0 to 12, in the range of 6.0 to 9.0 or in the range of 6.5 to 9.0, at 490 nm of an approx. 1000X diluted sample. As a consequence, powders according to the invention have the advantage of caramel powder, but not the disadvantages of caramel powder.

The food colouring is added in an amount of between 0.01 % w/w and 5% w/w, between 0.05% w/w and 1% w/w or between 0.1% w/w and 0.8% w/w, based on the weight of the food or feed product or food or feed ingredient before the food colourant is added. In this way a food or feed product or food or feed ingredient according to the invention is obtained. A food or feed product or food or feed ingredient comprising a food colourant according to the invention is also encompassed by the present invention.

## EXAMPLES

### Dry matter content

Dry matter content was determined by drying a sample in pumice stone powder in an oven at 104° C until a constant weight was obtained. It is preferably expressed as (weight after drying)/(weight before drying) x 100%.

### Colour intensity

Colour intensity was calculated from absorbance at 490 nm corrected for weight according to the formula:

$$\text{colour intensity} = \frac{\text{sample absorbance at 490 nm}}{\text{sample weight (grams)}}$$

whereby the sample is a 0.05-0.15 w/v % solution of the colourant in demineralised water, which is filtered through a 0.20 μm filter to remove any solids. Absorbance at 490 nm is measured in a DR1900-02 photospectrometer (Hach Lange GmbH, Germany) using a light path of 1 cm. An intensity of at least 6 corresponds to a dark colour, such as dark brown to black. If correction for dry matter was indicated, colour intensity was divided by dry matter content.

### Ingredients

The following ingredients were used:

| | |
|---|---|
| Apple syrup: | Herbarom AF 01: from Herbafood, Germany |
| Honey: | Bee easy Wilde bloemen honing from Langnese, The Netherlands |
| Leek juice: | Leek juice concentrate, cloudy R=63, frozen, jerrycan 20 kg from SVZ, The Netherlands |
| Lysine: | L-lysine mono hydrochloride from CJ Haide (Ningbo) Biotech Co., Ltd., China (produced by fermentation) |
| Glycine: | Glycine (food grade) CAS: 56-40-6, Hebei Huayang Biological Technology co., LTD, China |
| HVP: | Acid-hydrolysed vegetable protein; EXTER 100, Exter BV, The Netherlands |
| Yeast extract: | EXLV-LS-2111 from Levapan S.A., Colombia |
| Beef extract: | NR 2B Marfrig, Brasil |
| NaOH: | Sodium Hydroxide (33%) from Akzo Nobel Industrial Chemicals B.V., The Netherlands |
| Anti-Foam: | Struktol SB 420 from Schill+Seilacher, Germany |
| Sunflower oil: | Sunflower oil high oleic, refined & winterized, C. Thywissen GMBH, Germany |
| caramel powder: | CARAMEL E150a Type KF, Buisman BV, Zwartsluis, The Netherlands |
| caramel alternative: | Natural Burnt Sugar type BS 111, Buisman BV, Zwartsluis, The Netherlands |

All percentages mentioned in Examples 1A and 4-7 below are w/w and based on 100% dry matter. Other percentages are as indicated in the Example.

### Example 1A Preparing a liquid food colourant according to the invention.

A composition comprising 44% w/w apple syrup (Herbarom AF 01, Herbafood, Germany), 53% w/w L-lysine mono hydrochloride (CJ Haide (Ningbo) Biotech Co., Ltd., China) and 2% w/w NaOH 33% for pH adjustment (Akzo Nobel Industrial Chemicals B.V., The Netherlands) was heated from room temperature to 80 °C in the presence of 0.1% w/w anti-foaming (Struktol SB 420, from Schill+Seilacher, Germany). While stirring at 100-1000 rpm, the product was cooked at the core temperature of 105 °C for 7 hours at atmospheric pressure. After the reaction, a dark brown to black liquid product with a dry matter of about 70% was obtained. The colour intensity of the liquid product was 8.9 on dry matter. This shows that dark brown to black liquids according to the invention can be prepared from natural ingredients.

| Table 1 | |
|---|---|
| Apple syrup | 44% |
| Lysine | 53% |
| Anti-Foaming | 0.1% |
| Sodium hydroxide | 2.0% |
| colour intensity | 8.9 |
| pH | 3.9 |

**Example 1B Powder according to the invention**

The liquid of Example 1A was put in a tray together with 0.02% - 0.1% w/w anti-foaming agent and 0.1% - 1% w/w high oleic sunflower oil. The liquid was dried in an vacuum oven with a set temperature of 95 - 100 $^0$C at 100 mbar for 45 minutes. After the 45 minutes the vacuum was increased to 10-40 mbar for another 5 hours. The product was taken out of the oven and cooled in a low humidity room to room temperature ($20^0$C) and the resulting cake was ground to pass a 1-mm sieve which resulted in a dark brown powder. The colour intensity of the powder product was 8.9. In comparison, the colour intensity of caramel powder (CARAMEL E150a Type KF) was 6.0. This shows that the powder according to the invention has a higher colour intensity than caramel powder, and is thus darker than caramel powder. As will be shown in the Examples below, all the colourants prepared using the process according to the invention are as least as dark as caramel powder. Colourants according to the invention have the advantage of the caramel powder, but not the disadvantages of the caramel powder, because they are produced by a different method.

**Example 2 Vinegar colouring**

The liquid product of example 1A was compared to commercially available products as follows: 0.1 gram of each product was mixed with 50 grams of vinegar (AH natuurazijn wit (Albert Heijn B.V., The Netherlands) and compared. The vinegar-solutions were filtered through a filter with a cut-off of 0.20 $\mu$m to remove any solids and analysed in a photospectrometer (HACH LANGE GmbH, DR1900-02) through a 1 cm light pad on 490 nm and 610 nm and the absorbance was compared. It was found that the product according to the invention was much darker than apple syrup, caramel powder or caramel alternative (Natural Burnt Sugar). In Table 2A, product results are shown. In Table 2B, absorbance corrected for dry matter is shown.

**Table 2A**

| Sample | Ingredient (0.1 gram) in 50 gram vinegar | Colour description | Absorbance 490 nm | Absorbance 610 nm |
|---|---|---|---|---|
| 0 | None | Clear | 0.000 | 0.000 |
| A | apple syrup (Herbarom) | Yellow | 0.085 | 0.018 |
| B | Natural Burnt Sugar | Orange-light brown | 0.237 | 0.040 |
| C | caramel powder | Dark brown | 0.583 | 0.090 |
| D | Liquid of example 1A | Dark brown | 1.175 | 0.249 |

**Table 2B**

| Sample | | Absorbance at 490 nm corrected for dry matter | Absorbance at 610 nm corrected for dry matter |
|---|---|---|---|
| 0 | None | 0.000 | 0.000 |
| A | apple syrup | 0.122 | 0.026 |
| B | Natural Burnt Sugar | 0.362 | 0.061 |

(continued)

| Sample | | Absorbance at 490 nm corrected for dry matter | Absorbance at 610 nm corrected for dry matter |
|---|---|---|---|
| C | caramel powder | 0.583 | 0.090 |
| D | Liquid of example 1A | 1.362 | 0.263 |

**Example 3. Application test in low acidity**

The powder of Example 1B was dissolved in white wine vinegar and in several different soft drinks (Table 3) to obtain 1% w/v solutions. The 1% w/v solutions were diluted in demineralized water to obtain 2.5% solutions. As a comparison, caramel alternative and caramel were also dissolved in vinegar to 1% w/v and then diluted in demineralized water to obtain a 2.5% w/v solution.

**Table 3**

| | pH | sugar (% w/v) |
|---|---|---|
| White wine vinegar Aceto di vino bianco, Olitalia, Italy | 2.80 | 0.1 |
| Fanta Orange, The Coca-Cola Company, the Netherlands | 3.16 | 7.6 |
| Sprite lemon-lime no sugar, The Coca-Cola Company, the Netherlands | 2.89 | 0.0 |
| Orange juice from concentrate, Albert Heijn, the Netherlands | 3.80 | 9.0 |

The 2.5% w/v solutions were used to colour the liquid products of Table 3. If similar amounts of caramel or caramel alternative were added, the liquid products of Table 3 were not as dark as with the powder of Example 1B. To match the colour obtained with the powder of Example 1B, 2-3 times as much of the caramel or the caramel alternative was required. This shows that the colouring capabilities of powder prepared using the method according to the invention are greater than the colouring capabilities of caramel or caramel alternative.

**Example 4 Dark food colourants prepared from vegetable materials and honey**

Example 1 was repeated except that three different sources of natural sugar were used, viz. honey, apple syrup and leek juice, and that yeast extract was added for preparing a food colourant according to the invention. The recipes are given in Tables 4A to 4C. The dark brown liquid end products had a dry matter content of 70% and were oven dried in a vacuum oven until powders were obtained with a dry matter content of at least 95%. The colour intensity of the dark brown to black powders was 7.0 for honey, 8.1 for apple syrup and 6.5 for leek. This shows that dark brown to black powders according to the invention can be prepared from vegetable, fruit or honey.

| Table 4A | |
|---|---|
| Honey | 38.5% |
| Yeast extract | 13.1% |
| Lysine | 45.8% |
| Anti-Foaming | 0.1% |
| Sodium hydroxide | 1.8% |
| colour intensity | 7.0 |
| pH | 3.9 |

| Table 4B | |
|---|---|
| Apple syrup | 38.4% |
| Yeast extract | 13.1% |
| Lysine | 45.9% |
| Anti-Foaming | 0.1% |
| Sodium hydroxide | 1.8% |

(continued)

| Table 4B | |
|---|---|
| colour intensity | 8.1 |
| pH | 4.2 |

| Table 4C | |
|---|---|
| Leek juice | 38.4% |
| Yeast extract | 13.1% |
| Lysine | 45.9% |
| Anti-Foaming | 0.1% |
| Sodium hydroxide | 1.8% |
| colour intensity | 6.5 |
| pH | 4.1 |

**Example 5 Dark food colourants prepared using different amino acids**

Example 4 was repeated except that the control (Table 5A) did not contain amino acids and that in one recipe glycine (5B) was used. The different recipes are given in Tables 5A to 5C, after correction for dry matter. Glycine and lysine were used equivalent molar amounts, leading to differences in %. The pH in all recipes was set at about 4.1 using sodium hydroxide. The recipes with lysine and glycine gave dark brown to black liquids with a dry matter content of 65% and a colour intensity of 9.8 (glycine) and 7.7 (lysine). The control was light brown and had a colour intensity of 2.5. This shows that amino acids are required for preparing the dark brown to black colourant according to the invention, and that both glycine and lysine give dark colourants. When equivalent molar amounts of serine were used instead of lysine or glycine, a similar result to 5C was found. This shows that serine may also be used to prepare a dark colourant according to the invention.

| Table 5A | |
|---|---|
| Apple syrup | 71.9% |
| Yeast extract | 24.6% |
| Amino acid | 0.0% |
| Anti-Foaming | 0.1% |
| Sodium hydroxide | 3.3% |
| colour intensity | 2.5 |
| pH | 4.1 |

| Table 5B | |
|---|---|
| Apple syrup | 54.2% |
| Yeast extract | 18.6% |
| Glycine | 27.1% |
| Anti-Foaming | 0.1% |
| Sodium hydroxide | 0.0% |
| colour intensity | 9.8 |
| pH | 4.2 |

| Table 5C | |
|---|---|
| Apple syrup | 38.6% |
| Yeast extract | 13.2% |
| Lysine | 46.3% |
| Anti-Foaming | 0.1% |

(continued)

| Table 5C | |
|---|---|
| Sodium hydroxide | 1.8% |
| colour intensity | 7.7 |
| pH | 4.2 |

## Example 6. Dark food colourants prepared using different protein sources as fillers

Dark food colourants were prepared as described in Example 4, except that yeast extract was replaced by beef extract or hydrolysed vegetable protein (HVP). The dark brown to black liquid end products had a dry matter content of 70% and a colour intensity of 8.1 for yeast extract, 7.2 for beef extract and 7.1 for HVP.

| Table 6A | |
|---|---|
| Apple syrup | 39% |
| Yeast extract | 13% |
| Lysine | 46% |
| Anti-Foaming | 0% |
| Sodium hydroxide | 2% |
| colour intensity | 8.1 |
| pH | 4.2 |

| Table 6B | |
|---|---|
| Apple syrup | 39% |
| Beef extract | 13% |
| Lysine | 46% |
| Anti-Foaming | 0% |
| Sodium hydroxide | 2% |
| colour intensity | 7.2 |
| pH | 4.2 |

| Table 6C | |
|---|---|
| Apple syrup | 39% |
| HVP | 13% |
| Lysine | 46% |
| Anti-Foaming | 0% |
| Sodium hydroxide | 2% |
| colour intensity | 7.1 |
| pH | 4.2 |

This shows that dark powders and liquids according to the invention can be prepared using several types of extracts as fillers.

## Example 7 Dark food colourants prepared at different pH values

Dark food colourants were prepared as described in Example 4, except that in one preparation, no sodium hydroxide was included. In the other preparation, 28% of the total amount of sodium hydroxide was added at start, after 1 hour 24% of the sodium hydroxide was added, after three hours 24%, and after six hours the last 24% was added. In both cases, dark brown to black liquids were obtained with a dry matter content of 70% and the colour intensity of 8.8 (no pH correction) and 6.3 (with pH correction). This shows that pH adjustment is not required in order to obtain the dark colourant according to the invention.

| Table 7A | | |
|---|---|---|
| Apple syrup | 39% | |
| Yeast extract | 13% | |
| Lysine | 47% | |
| Anti-Foaming | 0% | |
| Sodium hydroxide | 0% | |
| colour intensity | | 8.8 |
| pH | | 3.5 |

| Table 7B | | |
|---|---|---|
| Apple syrup | 37% | |
| Yeast extract | 13% | |
| Lysine | 44% | |
| Anti-Foaming | 0% | |
| Sodium hydroxide | 6% | |
| colour intensity | | 6.3 |
| pH | | 7.0 |

**Example 8 Application in meat balls**

The dark food colourant of example 7 was used to prepare meatballs. Meatballs (Soepballen, Slagerijen Kaldenberg, Nederland), were boiled at 80°C for 10 minutes in water with a 1% solution dark food colourant of Example 7, recipe A. The meat balls cooked without colourant were pale, like boiled meat. The meat balls cooked in food colourant of example 7, recipe A were medium to dark brown, as if they were fried or roasted. This shows that the dark food colourant prepared according to the method of the invention may be used to change the colour of food to give positive associations, like roasted, baked, grilled or fried.

**Example 9. Dark food colourant comparison with state of the art colourants.**

To compare with state of the art colourants, several measurements were performed.

The colour intensity of a liquid sample (65.4% dry matter) was calculated by measuring the absorbance at 600 nm of a 2% w/v sample in 100 ml H20 of a colourant according to the invention. The absorbance was 2.53. The highest absorbance of state of the art colourants at the same concentration at 600 nm was 1.81.

The absorbance of a colourant according to the invention (2.5 gram at 250 ml) was measured at 610 nm and was 1.271. The highest absorbance of state of the art colourant at the same concentration at 610 nm was 0.9. Results are presented in in Table 8.

**Table 8**

| | | comparison literature values | Abs 600 nm |
|---|---|---|---|
| | 1A | liquid sample (65.4% dry matter) of the invention, 2 g/100ml, absorbance 600 nm | 2.53 |
| | 1B | CH648053: 2% w/v, absorbance 600 nm (comparison) | 1.81 |
| | | | **Abs 610 nm** |
| | 2A | powder according to the invention, 2.5 gram at 250 ml, absorbance 610 nm | 1.27 |
| | 2B | US 2006/0003061: 2.5 gram at 250 ml, absorbance 610 nm (comparison) | 0.9 |

This shows that the product according to the invention is much darker than products described in literature based on isolated glucose and acid hydrolysate of peanuts (CH648053) or based on sugars sources and gluconic acid derivatives (US 2006/0003061).

**Example 10 Application test in confectionery**

For a basic dough, 225 gr butter, 150 gr white caster sugar and 8 gr vanilla sugar were added to a food processor (KichtenAid heavy duty model 5KPM5, KitchenAid, USA) with butterfly whisk and mixed until everything is smooth. Then, one egg yolk was added and mixed until everything was smooth. Finally, 280 gr flour was added in two parts and some salt to form a basic dough. The dough was divided into four equal parts. To three of these parts 1% w/w colourant powder was added, using three different colourant powders, viz. powder according to the invention, caramel powder or caramel alternative was added. To the control, no colourant was added.

The dough and powder were mixed well using a KichtenAid heavy duty model 5KPM5 food processor (KitchenAid, USA). Then, each dough part was wrapped in cling film and stored at 4 degrees C for at least 1 hour. Next, the doughs were formed into little balls of 1.5 cm diameter and flattened to form cookies. The cookies were baked in a preheated oven for 16 minutes at 180 °C. After the cookies were baked they were tasted according to a sensory test (Table 9).

Cookies prepared using the powder according to the invention were darker than cookies prepared from the caramel alternative and had similar colour intensity as cookies prepared using caramel powder (visual inspection). Caramel powder added a bitter taste to the cookies, which bitter taste was not experienced in cookies prepared using the powder according to the invention. This shows that the powder according to the invention is an excellent caramel replacer which does not add sweet or bitter taste.

**Table 9**

| | | colour compared to control | taste compared to control |
|---|---|---|---|
| | dough (control) | Yellow | sweet |
| 1 | dough + 1% w/w powder according to the invention, prepared in Example 1B | dark brown | less sweet, light roasted, low taste intensity |
| 2 | dough + 1% w/w caramel powder | dark brown | less sweet, bitter taste |
| 3 | dough + 1% w/w caramel alternative Natural Burnt sugar | light brown | caramel sweet taste |

**Claims**

1.  A method for preparing a food colourant having a dark brown to black colour and having a colour intensity of at least 6 at 490 nm, wherein the method comprises:

    (i) providing a liquid composition comprising 15% w/w to 60% w/w of a fruit, vegetable, honey or a fruit or vegetable side stream, syrup, sap, juice, pulp, puree or extract and 25% w/w to 85% w/w of an amino acid;
    (ii) heating the liquid composition for 1 to 12 hours at 85 to 110 degrees C;
    (iii) optionally, then drying the heated liquid composition until a powder or paste is obtained with a dry matter content of 65% w/w to 100% w/w by weight of the powder or paste.

2.  A method according to claim 1, wherein in step (ii) the liquid composition is heated for 4 to 8 hours at 85 to 110 degrees C.

3.  A method according to any previous claim, wherein the liquid after heating in step (ii) is dried, preferably in a vacuum oven.

4.  A method according to any previous claim, wherein the fruit or vegetable is apricot, agave, apple, banana, bean, beet, Brussels sprouts, carrot, cherry, courgette, date, fig, grape, leek, lychee, mango, melon, passion fruit, pear, peach, pineapple, plum, prune, pumpkin, tomato, corn, onion, pea, sweet potato or zucchini.

5.  A method according to any previous claim, wherein the amino acid is obtained by microbial fermentation, crystallisation or extraction.

6.  A method according to any previous claim, wherein the amino acid is lysine, serine or glycine.

**7.** A food colourant obtained by the method according to any previous claim.

**8.** Use of the food colourant according to claim 7 in the preparation of a food or feed product or food or feed ingredient.

**9.** Use according to claim 8, wherein the food colourant is used to give a boiled food or feed product or food or feed ingredient the appearance of a fried, roasted, baked or grilled food or feed product or food or feed ingredient.

**10.** A food or feed product or food or feed ingredient comprising between 0.01% w/w and 5% w/w of a food colourant, wherein the food colourant is a food colourant according to claim 7, in particular a food or feed product or food or feed ingredient which is a bakery product, a meat product, a dairy product, a ready-meal, a canned product, a sauce, dressing or gravy, a snack product, a soup product, a savoury product, a sweet product or a beverage.

**11.** A food or feed product or food or feed ingredient according to claim 10, wherein the beverage product is an alcoholic beverage, a milk-based beverage, a powdered beverage or an acidic drink, such as an acidic soft drink.

**12.** A food or feed product or food or feed ingredient according to claim 10 or 11, wherein the food or feed product or food or feed ingredient is for healthy individuals, patients, people on special diets, elderly, children, pets, husbandry, cattle, zoo animals, farm animals or sport animals.

**13.** Use of a composition comprising 15% w/w to 60% w/w of a fruit, vegetable, honey or a fruit or vegetable side stream, syrup, sap, juice, pulp, puree or extract and 25% w/w to 85% w/w of an amino acid in a process for preparing a food colourant having a dark brown to black colour and having a colour intensity of at least 6 at 490 nm.

**Patentansprüche**

**1.** Verfahren zur Herstellung eines Lebensmittelfarbstoffs mit einer dunkelbraunen bis schwarzen Farbe und einer Farbintensität von mindestens 6 bei 490 nm, wobei das Verfahren umfasst:

(i) Bereitstellen einer flüssigen Zusammensetzung, umfassend 15 % Gew./Gew. bis 60 % Gew./Gew. einer Frucht, eines Gemüses, Honigs oder eines Frucht- oder Gemüsenebenstroms, Sirups, Pflanzensafts, Safts, Fruchtmarks, Pürees oder Extrakts, und 25 % Gew./Gew. bis 85 % Gew./Gew. einer Aminosäure;
(ii) Erwärmen der flüssigen Zusammensetzung für 1 bis 12 Stunden auf 85 bis 110 °C;
(iii) gegebenenfalls anschließendes Trocknen der erwärmten flüssigen Zusammensetzung, bis ein Pulver oder eine Paste mit einem Trockensubstanzgehalt von 65 % Gew./Gew. bis 100 % Gew./Gew. des Pulvers oder der Paste erhalten wird.

**2.** Verfahren nach Anspruch 1, wobei in Schritt (ii) die flüssige Zusammensetzung 4 bis 8 Stunden auf 85 bis 110 °C erwärmt wird.

**3.** Verfahren nach einem der vorhergehenden Ansprüche, wobei die Flüssigkeit nach dem Erwärmen in Schritt (ii) getrocknet wird, vorzugsweise in einem Vakuumofen.

**4.** Verfahren nach einem der vorhergehenden Ansprüche, wobei die Frucht oder das Gemüse Aprikose, Agave, Apfel, Banane, Bohne, Rübe, Rosenkohl, Möhre, Kirsche, Zucchetto, Dattel, Feige, Traube, Lauch, Lychee, Mango, Melone, Passionsfrucht, Birne, Pfirsich, Ananas, Pflaume, Zwetschge, Kürbis, Tomate, Mais, Zwiebel, Erbse, Süßkartoffel oder Zucchini ist.

**5.** Verfahren nach einem der vorhergehenden Ansprüche, wobei die Aminosäure durch mikrobielle Fermentation, Kristallisation oder Extraktion erhalten wird.

**6.** Verfahren nach einem der vorhergehenden Ansprüche, wobei die Aminosäure Lysin, Serin oder Glycin ist.

**7.** Lebensmittelfarbstoff, erhalten nach dem Verfahren gemäß einem der vorhergehenden Ansprüche.

**8.** Verwendung des Lebensmittelfarbstoffs gemäß Anspruch 7 bei der Herstellung eines Lebensmittel- oder Futtermittelprodukts oder Lebensmittel- oder Futtermittelbestandteils.

9. Verwendung nach Anspruch 8, wobei der Lebensmittelfarbstoff verwendet wird, um einem gekochten Lebensmittel- oder Futtermittelprodukt oder Lebensmittel- oder Futtermittelbestandteil das Erscheinungsbild eines gebratenen, gerösteten, gebackenen oder gegrillten Lebensmittel- oder Futtermittelprodukts oder Lebensmittel- oder Futtermittelbestandteils zu verleihen.

10. Lebensmittel- oder Futtermittelprodukt oder Lebensmittel- oder Futtermittelbestandteil, umfassend zwischen 0,01 % Gew./Gew. und 5 % Gew./Gew. eines Lebensmittelfarbstoffs, wobei der Lebensmittelfarbstoff ein Lebensmittelfarbstoff gemäß Anspruch 7 ist, insbesondere ein Lebensmittel- oder Futtermittelprodukt oder Lebensmittel- oder Futtermittelbestandteil, das/der ein Backwarenprodukt, Fleischprodukt, ein Milchprodukt, ein Fertiggericht, ein Konservenprodukt, eine Soße, Dressing oder Bratensoße, ein Snackprodukt, ein Suppenprodukt, ein herzhaftes Produkt, ein süßes Produkt oder ein Getränk ist.

11. Lebensmittel- oder Futtermittelprodukt oder Lebensmittel- oder Futtermittelbestandteil nach Anspruch 10, wobei das Getränkeprodukt ein alkoholisches Getränk, ein Getränk auf Milchbasis, ein pulverförmiges Getränk oder ein saures Getränk, wie etwa ein saures Erfrischungsgetränk, ist.

12. Lebensmittel- oder Futtermittelprodukt oder Lebensmittel- oder Futtermittelbestandteil nach Anspruch 10 oder 11, wobei das Lebensmittel- oder Futtermittelprodukt oder der Lebensmittel- oder Futtermittelbestandteil für gesunde Individuen, Patienten, Menschen mit speziellen Diäten, ältere Menschen, Kinder, Haustiere, Viehzucht, Rinder, Zootiere, Nutztiere oder Sporttiere ist.

13. Verwendung einer Zusammensetzung, umfassend 15 % Gew./Gew. bis 60 % Gew./Gew. einer Frucht, eines Gemüses, Honigs oder eines Frucht- oder Gemüsenebenstroms, Sirups, Pflanzensafts, Safts, Fruchtmarks, Pürees oder Extrakts und 25 % Gew./Gew. bis 85 % Gew./Gew. einer Aminosäure in einem Prozess zur Herstellung eines Lebensmittelfarbstoffs mit dunkelbrauner bis schwarzer Farbe und einer Farbintensität von mindestens 6 bei 490 nm.

**Revendications**

1. Procédé de préparation d'un colorant alimentaire ayant une couleur brun foncé à noire et ayant une intensité de couleur d'au moins 6 à 490 nm, dans lequel le procédé comprend :

   (i) la fourniture d'une composition liquide comprenant de 15 % p/p à 60 % p/p d'un fruit, d'un légume, d'un miel ou d'un flux secondaire de fruit ou de légume, d'un sirop, d'une sève, d'un jus, d'une pulpe, d'une purée ou d'un extrait et 25 % p/p à 85 % p/p d'un acide aminé ;
   (ii) le chauffage de la composition liquide pendant 1 à 12 heures à une température de 85 à 110 degrés C ;
   (iii) éventuellement, ensuite le séchage de la composition liquide chauffée jusqu'à obtention d'une poudre ou d'une pâte ayant une teneur en matière sèche de 65 % p/p à 100 % p/p en poids de la poudre ou de la pâte.

2. Procédé selon la revendication 1, dans lequel, dans l'étape (ii), la composition liquide est chauffée pendant 4 à 8 heures à une température de 85 à 110 degrés C.

3. Procédé selon l'une quelconque des revendications précédentes, dans lequel le liquide après chauffage dans l'étape (ii) est séché, de préférence dans un four à vide.

4. Procédé selon l'une quelconque des revendications précédentes, dans lequel le fruit ou légume est l'abricot, l'agave, la pomme, la banane, le haricot, la betterave, le chou de Bruxelles, la carotte, la cerise, la courgette, la datte, la figue, le raisin, le poireau, le litchi, la mangue, le melon, le fruit de la passion, la poire, la pêche, l'ananas, la prune, le pruneau, le potiron, la tomate, le maïs, l'oignon, le petit pois, la patate douce ou la courgette.

5. Procédé selon l'une quelconque des revendications précédentes, dans lequel l'acide aminé est obtenu par fermentation microbienne, cristallisation ou extraction.

6. Procédé selon l'une quelconque des revendications précédentes, dans lequel l'acide aminé est la lysine, la sérine ou la glycine.

7. Colorant alimentaire obtenu par le procédé selon l'une quelconque des revendications précédentes.

8. Utilisation du colorant alimentaire selon la revendication 7 dans la préparation d'un produit alimentaire ou alimentaire pour animaux ou d'un ingrédient alimentaire ou alimentaire pour animaux.

9. Utilisation selon la revendication 8, dans laquelle le colorant alimentaire est utilisé pour donner à un aliment ou un produit alimentaire pour animaux ou à un ingrédient alimentaire ou alimentaire pour animaux bouilli l'apparence d'un aliment ou d'un produit alimentaire pour animaux ou d'un ingrédient alimentaire ou alimentaire pour animaux frit, rôti, cuit ou grillé.

10. Produit alimentaire ou alimentaire pour animaux ou ingrédient alimentaire ou alimentaire pour animaux comprenant entre 0,01 % p/p et 5 % p/p d'un colorant alimentaire, dans lequel le colorant alimentaire est un colorant alimentaire selon la revendication 7, en particulier un produit alimentaire ou alimentaire pour animaux ou un ingrédient alimentaire ou alimentaire pour animaux qui est un produit de boulangerie, un produit carné, un produit laitier, un plat prêt, un produit en conserve, une sauce, une vinaigrette ou une sauce, un produit de grignotage, un produit de soupe, un produit salé, un produit sucré ou une boisson.

11. Produit alimentaire ou alimentaire pour animaux ou ingrédient alimentaire ou alimentaire pour animaux selon la revendication 10, dans lequel le produit de boisson est une boisson alcoolisée, une boisson à base de lait, une boisson en poudre ou une boisson acide, telle qu'une boisson sans alcool acide.

12. Produit alimentaire ou alimentaire pour animaux ou ingrédient alimentaire ou alimentaire pour animaux selon la revendication 10 ou 11, dans lequel le produit alimentaire ou alimentaire pour animaux ou l'ingrédient alimentaire ou alimentaire pour animaux est destiné à des individus en bonne santé, des patients, des personnes suivant des régimes spéciaux, des personnes âgées, des enfants, des animaux de compagnie, des animaux d'élevage, des bovins, des animaux de zoo, des animaux de ferme ou des animaux de sport.

13. Utilisation d'une composition comprenant de 15 % p/p à 60 % p/p d'un fruit, d'un légume, d'un miel ou d'un flux secondaire de fruit ou légume, d'un sirop, d'une sève, d'un jus, d'une pulpe, d'une purée ou d'un extrait et 25 % p/p à 85 % p/p d'un acide aminé dans un procédé de préparation d'un colorant alimentaire ayant une couleur brun foncé à noire et ayant une intensité de couleur d'au moins 6 à 490 nm.

**EP 3 975 751 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160278400 A
- US 4886659 A
- US 8557319 B
- CH 648053
- CN 107684067
- US 2006003061 A
- US 20060003061 A